# EUROPEAN PATENT APPLICATION

(11) **EP 4 566 993 A1**
(43) Date of publication of application: **11.06.2025**
(21) Application number: 23849826.5
(22) Date of filing: 06.07.2023
(51) Int. Cl.: C01D 15/08, H01M 4/505, H01M 4/525

(54) **LITHIUM CARBONATE POWDER**

(30) Priority: 04.08.2022 JP 2022124949
(71) Applicant: SUMITOMO METAL MINING CO., LTD., Tokyo 105-8716 (JP)
(72) Inventor: SATO, Kazuto, Niihama-shi, Ehime 792-0002 (JP); RYOSHI, Kazuomi, Niihama-shi, Ehime 792-0002 (JP)
(74) Representative: Jones, Nicholas Andrew
(86) International application number: PCT/JP2023/025127
(87) International publication number: WO 2024/029267

(57) **Abstract**

The present invention aims to provide lithium carbonate powder capable of increasing productivity in the production of powder materials with high feed performance. The present invention relates to lithium carbonate powder having a specific surface area of more than 1.0 m²/g, and D90 of 9 µm or more as measured through laser diffraction scattering particle size distribution analysis, where D90 is a 90% cumulative particle diameter on a volume basis.

## Description

### TECHNICAL FIELD

The present invention relates to lithium carbonate powder.

### BACKGROUND ART

Lithium carbonate powder is used as an industrial raw material in various fields. Lithium carbonate powder is used as raw material powder of powder materials, such as ceramics and the like. For example, a lithium metal complex oxide produced from lithium carbonate and a metal complex compound is used as a positive electrode material of a lithium-ion secondary battery used as a power source for mobile phones, laptop computers, and the like.

Patent Document 1 discloses a production method of a hexagonal lithium cobalt complex oxide for a lithium secondary battery. This disclosed production method includes: mixing cobalt oxyhydroxide powder having a weight average particle diameter of 1 µm to 20 µm and a specific surface area of 2 m²/g to 200 m²/g, with lithium carbonate powder having a weight average particle diameter of 1 µm to 50 µm and a specific surface area of 0.1 m^{2/}g to 10 m^{2/}g; and firing the resulting mixture in an oxygen-containing atmosphere.

Patent Document 2 discloses a production method of a positive electrode active material for a lithium-ion secondary battery, and the positive electrode active material contains a complex oxide (I) that contains either or both of Ni and Co, Mn, and Li, where the amount by mol of Li is more than 1.2 times the total amount by mol of Ni, Co, and Mn. This disclosed production method includes firing a mixture of a carbonate compound and lithium carbonate. The carbonate compound has a D50 diameter of 3 µm to 15 µm and a D90 diameter of less than 40 µm on a volume basis as measured by a laser diffraction scattering particle size distribution analyzer using water as a dispersion medium, and contains either or both of Ni and Co, and Mn. The lithium carbonate has a D50 diameter of 3 µm to 15 µm and a D90 diameter of less than 40 µm on a volume basis as measured by a laser diffraction scattering particle size distribution analyzer using 2-propanol as a dispersion medium.

### RELATED ART DOCUMENTS

### PATENT DOCUMENTS

Patent Document 1: Japanese Unexamined Patent Application Publication No. 2003-002661
Patent Document 2: Japanese Unexamined Patent Application Publication No. 2015-135800

### SUMMARY OF THE INVENTION

### PROBLEMS TO BE SOLVED BY THE INVENTION

According to Patent Document 1, use of the obtained hexagonal lithium cobalt complex oxide as a positive electrode active material for a lithium secondary battery enables use in a wide range of voltage, and achieves characteristics, such as, for example, large electric capacity (e.g., weight capacity density, volume capacity density, or the like), excellent storage stability at high temperatures, charge/discharge cycle durability, and safety.

According to Patent Document 2, it is possible to produce a positive electrode active material capable of increasing the initial discharge capacity and the initial charge/discharge efficiency of lithium-ion secondary batteries.

In recent years, an attempt has been actively made to use lithium-ion secondary batteries for large secondary batteries. In particular, they are greatly expected to be used as power sources for hybrid vehicles and electric vehicles. For use as power sources for automobiles, reduction in cost of lithium-ion secondary batteries is desired in addition to performance, such as in high capacity and high output.

In industrial production of powder materials, feeding of raw materials is often automated by raw material feeding facilities. In this case, if the flowability of the raw material powder is low, the feed rate in the raw material feeding facilities decreases, and thus productivity decreases. Further, occurrence of clogging of the raw material causes trouble stopping the operation.

Therefore, in view of the issues in the above related art, it is an object of one aspect of the present invention to provide lithium carbonate powder capable of increasing productivity in the production of powder materials with high feed performance.

### MEANS FOR SOLVING THE PROBLEMS

One aspect of the present invention for addressing the above issues provides lithium carbonate powder that has a specific surface area of more than 1.0 m²/g, and D90 of 9 µm or more as measured through laser diffraction scattering particle size distribution analysis, where D90 is a 90% cumulative particle diameter on a volume basis.

### ADVANTAGEOUS EFFECTS OF THE INVENTION

According to one aspect of the present invention, it is possible to provide lithium carbonate powder capable of increasing productivity in the production of powder materials with high feed performance.

### BRIEF DESCRIPTION OF THE DRAWINGS

[FIG. 1] FIG. 1 is a schematic diagram illustrating a configuration of a feed testing apparatus used in Examples.
[FIG. 2] FIG. 2 is a graph illustrating a relationship between D90 and a feed rate of lithium carbonate powder.
[FIG. 3] FIG. 3 is a graph illustrating a relationship between a specific surface area and a feed rate of lithium carbonate powder.

### DETAILED DESCRIPTION OF THE INVENTION

Hereinafter, embodiments of the present invention will be described in detail. The present invention is not limited to the embodiments below, and appropriate changes can be made without departing from the intent of the present invention. Also, in the following description, the expression "A to B" means "A or more and B or less".

### [Lithium Carbonate Powder]

The inventors of the present invention studied an increase in productivity in the production of powder materials using lithium carbonate powder. As a result, the inventors of the present invention obtained a finding that when lithium carbonate powder, which was being fed during a process, decreased in flowability of the lithium carbonate powder, feed performance of the powder to a mixing device and the like was reduced, and therefore, productivity in the production of powder materials decreased. Further, the inventors of the present invention obtained a finding that by controlling physical properties of the lithium carbonate powder, the flowability of the lithium carbonate powder was able to be improved and the feed performance was able to be increased, and therefore, the productivity in the production of powder materials was able to be increased. On the basis of these findings, the present invention has been completed.

The feed performance in the present specification means that when feeding lithium carbonate powder from a hopper or the like, occurrence of clogging in a feeding path can be suppressed, and a feed rate is excellent.

### (1) D90 and Specific Surface Area

The lithium carbonate powder (hereinafter may be referred to simply as "lithium carbonate") of the present embodiment has a specific surface area of more than 1.0 m²/g, and D90 of 9 µm or more as measured through laser diffraction scattering particle size distribution analysis, where D90 is a 90% cumulative particle diameter on a volume basis. Thus, flowability of the lithium carbonate is enhanced to increase the feed performance, and the productivity in the production of powder materials can be increased.

The true density of lithium carbonate is 2.11 g/cm³. However, the bulk density of lithium carbonate used for the production of powder materials, e.g., fine powder like a positive electrode active material for a lithium-ion secondary battery, is low, i.e., about 0.3 g/cm³ to about 0.4 g/cm³. Therefore, the frequency of occurrence of troubles during feeding is high, such as occurrence of clogging and a decrease in feed rate, for example, in a hopper configured to feed lithium carbonate. An impact of the occurrence of such troubles on the productivity becomes severe, for example, in a raw material mixing step in which lithium carbonate is fed and mixed.

(D90) The lithium carbonate of the present embodiment has D90 of 9 µm or more. Thus, it is possible to obtain the carrier effect by the presence of coarse particles, i.e., the effect of contributing to the flow of powder by virtue of an increase in gravitational drop speed of particles having increased size and mass. Therefore, the lithium carbonate of the present embodiment is expected to have high flowability. The D90 of the lithium carbonate of the present embodiment is preferably 9.5 µm or more from the viewpoints of especially increasing productivity in the production of powder materials and maintaining the quality of powder materials.

No particular limitation is imposed on the upper limit of the D90 of the lithium carbonate. For example, preferably, the D90 of the lithium carbonate can be 30 µm or less, and more preferably 25 µm or less.

By setting the D90 of the lithium carbonate to be 30 µm or less, the reactivity between the lithium carbonate and other raw material powder can be enhanced, and thus the synthesis time of the powder materials can be reduced. That is, by setting the D90 of the lithium carbonate to be 30 µm or less, the productivity can be increased in aspects other than the feed performance. In addition, by setting the D90 of the lithium carbonate to be 30 µm or less, ununiform distribution of the composition in the powder mixture can be suppressed, and thus uniformity of the powder material can be enhanced.

### (Specific Surface Area)

The lithium carbonate of the present embodiment is enhanced in flowability by setting the specific surface area to be more than 1.0 m²/g. This is likely because setting the specific surface area to be more than 1.0 m²/g achieves a state in which submicron lithium carbonate particles are attached to the surfaces of the particles of the lithium carbonate, and the presence of the submicron particles physically suppresses van der Waals forces between the particles, and thus increases flowability. The specific surface area of the lithium carbonate of the present embodiment can be preferably 1.1 m²/g or more, and more preferably 1.2 m²/g or more, from the viewpoints of especially improving the flowability of the lithium carbonate and increasing the productivity in the production of powder materials.

No particular limitation is imposed on the upper limit of the specific surface area of the lithium carbonate of the present embodiment. The specific surface area of the lithium carbonate can be preferably 3.0 m²/g or less, and more preferably 2.5 m²/g or less. By setting the specific surface area of the lithium carbonate of the present embodiment to be 3.0 m²/g or less, it is possible to suppress the percentage of fine particles in the lithium carbonate, and suppress relative reduction in the particle size. Therefore, the effect of contributing to the flow of powder by virtue of the above-described gravitational drop speed can be especially enhanced.

### (2) D50 and D10

The lithium carbonate of the present embodiment is improved in flowability by setting the above D90 and specific surface area to be in the respective specific ranges. Therefore, for the lithium carbonate of the present embodiment, no particular limitation is imposed on other indices indicating the particle size distribution, such as, for example, D50, i.e., a 50% cumulative particle diameter on a volume basis, and D10, i.e., a 10% cumulative particle diameter on a volume basis, which are measured through laser diffraction scattering particle size distribution analysis.

However, from the viewpoint of increasing reactivity when producing powder materials, the D50 of the lithium carbonate of the present embodiment can be preferably 3 µm or more and less than 9 µm, and more preferably 4 µm or more and less than 8 µm. Also, from the viewpoint of further enhancing flowability, the D10 of the lithium carbonate of the present embodiment can be preferably 1 µm or more and less than 3 µm, and more preferably 1.5 µm or more and 2.5 µm or less.

By setting the D50 and the D10 of the lithium carbonate of the present embodiment to be in the above respective ranges, the feed performance and the reactivity of the lithium carbonate can be further improved, and the productivity can be further increased.

### (3) Flow Function

No particular limitation is imposed on the value of an index indicating the flowability of the lithium carbonate of the present embodiment. The lithium carbonate of the present embodiment preferably has a flow function by a shear-type flowability evaluation device of 2 or more. By setting the above flow function of the lithium carbonate of the present embodiment to be 2 or more, more preferably 3 or more, the flowability of the lithium carbonate powder can be further increased, and deposition during feeding is reduced, and better feed performance can be obtained. Here, the flow function is obtained from a relationship of a shear stress with respect to a normal stress in a static state and a dynamic shear stress in a steady state by application of a normal stress, and is a dimensionless index that qualitatively classifies the flowability of powder.

No particular limitation is imposed on the upper limit of the flow function of the lithium carbonate of the present embodiment. For example, the flow function of the lithium carbonate of the present embodiment can be set to be 10 or less.

### (4) Moisture Percentage

No particular limitation is imposed on the moisture percentage of the lithium carbonate of the present embodiment. The moisture percentage at 120°C according to the Karl Fischer method of the lithium carbonate of the present embodiment is preferably 0.5% by mass or less. By setting the above moisture percentage of the lithium carbonate of the present embodiment to be 0.5% by mass or less, occurrence of excessive aggregation and adhesion to the interior of the feeder tube can be suppressed, and the flowability can be especially enhanced. From the viewpoint of keeping the flowability higher, the above moisture percentage can be preferably 0.2% by mass or less.

### (5) Bulk Density

No particular limitation is imposed on the bulk density of the lithium carbonate of the present embodiment. The bulk density of the lithium carbonate of the present embodiment is preferably 0.2 g/cm³ or more and 0.5 g/cm³ or less, and more preferably 0.25 g/cm³ or more and 0.45 g/cm³ or less.

The bulk density can be calculated from the volume and mass of the lithium carbonate placed stilly in a graduated cylinder or the like without pressing the lithium carbonate.

The lithium carbonate of the present embodiment can be used as raw material powder in the production of powder materials, e.g., as raw material powder in the production of a lithium metal complex oxide. That is, the lithium carbonate of the present embodiment can be raw material powder of a lithium metal complex oxide. As described above, the lithium carbonate of the present embodiment has high reactivity with other raw material powder, and is excellent in feed performance to an apparatus. Therefore, the productivity of a production process can be enhanced by using the lithium carbonate of the present embodiment as raw material powder of a lithium metal complex oxide formed of fine powder.

### [Production Method of Lithium Carbonate Powder]

A configuration example of a production method of the lithium carbonate of the present embodiment will be described. According to the production method of the lithium carbonate powder of the present embodiment, the above-described lithium carbonate can be produced, and thus a part of duplicate description will be omitted.

No particular limitation is imposed on the production method of the lithium carbonate of the present embodiment. The lithium carbonate of the present embodiment can be produced, for example, by pulverizing coarse lithium carbonate particles, serving as a raw material, and adjusting the resulting particles in terms of D90, and further, if necessary, D50, D10, and the like, and in terms of a specific surface area. In the following description, D90, D50, and D10 may be collectively referred to as a "particle size".

For example, the above-described lithium carbonate can be obtained by pulverizing (crushing) lithium carbonate having a large particle diameter by a pulverizer so as to have an intended particle size distribution. That is, the production method of the lithium carbonate of the present embodiment can include a pulverizing step of pulverizing, for example, coarse lithium carbonate particles, serving as raw material lithium carbonate, by a pulverizer. As the coarse lithium carbonate particles, it is possible to use, for example, lithium carbonate having a particle size, such as D50 or the like, that is larger than the intended lithium carbonate.

No particular limitation is imposed on the pulverizer used in the pulverizing step. It is preferable to use, for example, a high-speed rotary pulverizer, such as a hammer mill, a pin mill, or the like, or an air flow pulverizer. It is more preferable to use a high-speed rotary pulverizer. The high-speed rotary pulverizer has a strong impact force, and generates many fine particles due to excessive pulverization. Therefore, the generated fine particles adhere to the surfaces of particles having larger particle diameters, and thus the specific surface area can be increased.

The hammer mill, which is the high-speed rotary pulverizer, can be formed into what is referred to as a screen mill, by disposing a porous plate, a screen, or a grid on the outlet side. The screen mill is preferably used in the pulverizing step because the particle size of the obtained lithium carbonate can be readily controlled.

Pulverizing conditions of the pulverizer in the pulverizing step are varied with the particle size and the specific surface area of the coarse lithium carbonate particles before pulverization, and thus no particular limitation is imposed on the pulverizing conditions. The pulverizing conditions can be adjusted and selected so as to achieve a desired particle size and a desired specific surface area. For example, by increasing the rotation speed of the high-speed rotary pulverizer, it is possible to increase the number of fine particles to be generated, and thus reduce the particle size. Also, by selecting the type of the outlet screen or the like of the hammer mill, it is possible to adjust the particle size while appropriately generating fine particles.

The production method of the lithium carbonate of the present embodiment may further include a sieving step, if necessary, in which the lithium carbonate after the pulverizing step is sieved. In addition, the production method of the lithium carbonate of the present embodiment may include a drying step of drying the lithium carbonate in order to adjust the moisture percentage.

### EXAMPLES

Hereinafter, the present invention will be described in more detail with reference to the Examples. However, the present invention is not limited to the following Examples.

### (1) Evaluation Method

The following analysis methods were used for evaluation of the lithium carbonate produced in Examples and Comparative Example below.

### (1-1) Particle size distribution, and particle sizes

The particle size distribution of the lithium carbonate was determined by a laser diffraction scattering particle size distribution analyzer using 2-propanol as a dispersion medium, and the particle sizes (D10, D50, D90, and D100) were calculated from the determined particle size distribution as cumulative particle diameters on a volume basis.

### (1-2) Specific Surface Area

The specific surface area was determined by the BET method through nitrogen gas adsorption.

### (1-3) Flow Function

Using a shear-type flowability evaluation device (Model: NS-S300, obtained from Nano Seeds Corporation), the flow function was determined from a relationship of a shear stress with respect to a normal stress in a static state and a dynamic shear stress in a steady state by application of a normal stress.

### (1-4) Moisture Percentage

According to the Karl Fischer method, the moisture percentage was determined through retention at 120°C for 2 hours. In Table 1, "< 0.1" means that the moisture percentage is less than 0.1% by mass.

### (1-5) Bulk Density

The bulk density was calculated from the volume and mass of the lithium carbonate placed stilly in a graduated cylinder of 250 mL without pressing the lithium carbonate.

### (1-6) Evaluation of Feed Performance

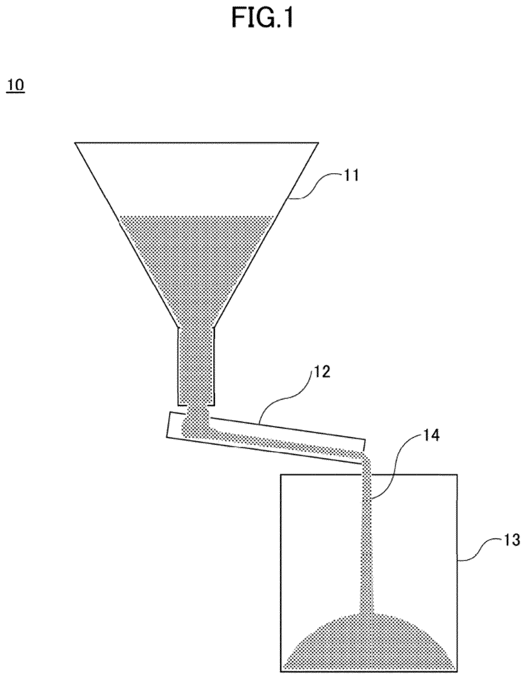

The feed performance of the lithium carbonates produced in the following Examples and Comparative Examples was evaluated using a feed testing apparatus illustrated in FIG. 1. Specifically, the feed performance was evaluated as the state of occurrence of clogging during feeding, i.e., as the feed rate when the above state of occurrence was confirmed, specifically, as the feed rate in a process leading to the above state of occurrence.

A feed testing apparatus 10 that was used includes a hopper 11 containing the lithium carbonate to be evaluated, a vibrating feeder 12, and a recovery container 13. The evaluation of the feed performance was performed by placing lithium carbonate powder 14, produced in the Examples and Comparative Examples, into the hopper 11, and observing a feeding process to the recovery container 13 through the vibrating feeder 12.

A not-illustrated electronic balance was placed below the recovery container 13, and a change in the mass of the lithium carbonate powder 14 fed to the recovery container 13 was measured, thereby calculating the feed rate. The feed rate was calculated from the feed amount of the lithium carbonate powder 14 for one minute from the time of confirming that the feed rate was stable after the start of feeding of the lithium carbonate powder 14.

The state of occurrence of clogging during feeding was evaluated in accordance with the following criteria.
A: There was no problem.
B: Clogging occurred, but was resolved by knocking.
C: Feeding stopped due to clogging.

Specifically, clogging during feeding was observed at the outlet of the hopper 11 and in the vibrating feeder 12. When the lithium carbonate was able to be stably fed without occurrence of clogging during feeding at both of the above places, the state of occurrence of clogging during feeding was evaluated as A, i.e., there was no problem.

When although clogging occurred at one of the above places, the feeding of the lithium carbonate did not stop, and the clogging was resolved by knocking, i.e., by hitting the vibrating feeder 12 or the like from the outer surface several times, the state of occurrence of clogging during feeding was evaluated as B.

When clogging occurred at one of the above places, the clogging was not able to be resolved even by knocking, and the feeding of the lithium carbonate stopped, the state of occurrence of clogging during feeding was evaluated as C.

The evaluation of the state of occurrence of clogging during feeding was performed for three minutes from the time of confirming that the feed rate was stable after the start of feeding of the lithium carbonate powder 14.

### (2) Regarding Production of Lithium Carbonate Powder

### [Example 1]

Coarse lithium carbonate particles (D50: 100 µm) were pulverized by an air flow pulverizer (ACM pulverizer), thereby obtaining lithium carbonate powder. The particle size, specific surface area, moisture percentage, bulk density, and flow function of the obtained lithium carbonate powder were evaluated. The evaluation results are presented in Table 1.

In addition, the above-described evaluation of feed performance was performed. The evaluation results are presented in Table 2.

### [Example 2]

Coarse lithium carbonate particles the same as those in Example 1 were pulverized by a high-speed rotary pulverizer (hammer mill), thereby obtaining lithium carbonate powder. The obtained lithium carbonate powder was evaluated in the same manner as in Example 1. The evaluation results are presented in Tables 1 and 2.

### [Example 3]

Coarse lithium carbonate particles the same as those in Example 1 were pulverized by a hammer mill, thereby obtaining lithium carbonate powder. When pulverizing the coarse lithium carbonate particles by the hammer mill, the rotation speed of the hammer mill was decreased such that D50 was adjusted to be greater than that in Example 2. The obtained lithium carbonate powder was evaluated in the same manner as in Example 1. The evaluation results are presented in Tables 1 and 2.

### [Comparative Example 1]

Coarse lithium carbonate particles the same as those in Example 1 were pulverized by an ACM pulverizer, thereby obtaining lithium carbonate powder. When pulverizing the coarse lithium carbonate particles by the ACM pulverizer, the rotation speed of the ACM pulverizer was decreased such that D50 was greater than that in Example 1. The obtained lithium carbonate powder was evaluated in the same manner as in Example 1. The evaluation results are presented in Tables 1 and 2.

**[Table 1]**

| | | Example 1 | Example 2 | Example 3 | Comparative Example 1 |
|---|---|---|---|---|---|
| Moisture percentage (% by mass) | | < 0.1 | < 0.1 | < 0.1 | < 0.1 |
| Particle size (µm) | D10 | 1.7 | 2.0 | 2.4 | 2.5 |
| | D50 | 4.7 | 5.5 | 5.8 | 5.6 |
| | D90 | 9.7 | 10.1 | 9.7 | 9.3 |
| | D100 | 26.2 | 26.2 | 22.0 | 22.0 |
| Specific surface area (m²/g) | | 1.1 | 1.7 | 1.5 | 1.0 |
| Bulk density (g/cm³) | | 0.35 | 0.33 | 0.37 | 0.36 |
| Flow function | | 1 | 4 | 3 | 1 |

**[Table 2]**

| | Example 1 | Example 2 | Example 3 | Comparative Example 1 |
|---|---|---|---|---|
| State of occurrence of clogging during feeding | B | A | A | c |
| Feed rate (kg/min) | 1.5 | 6 | 4 | 0.5 |

From the results presented in the tables, it was confirmed that Examples 1 to 3, in which the D90 was 9 µm or more and the specific surface area was more than 1.0 m²/g, did not readily cause clogging during feeding and increased the feed rate, compared to Comparative Example 1. In particular, the lithium carbonates of Examples 2 and 3, each having a specific surface area larger than the lithium carbonate of Example 1, can further increase the feed rate.

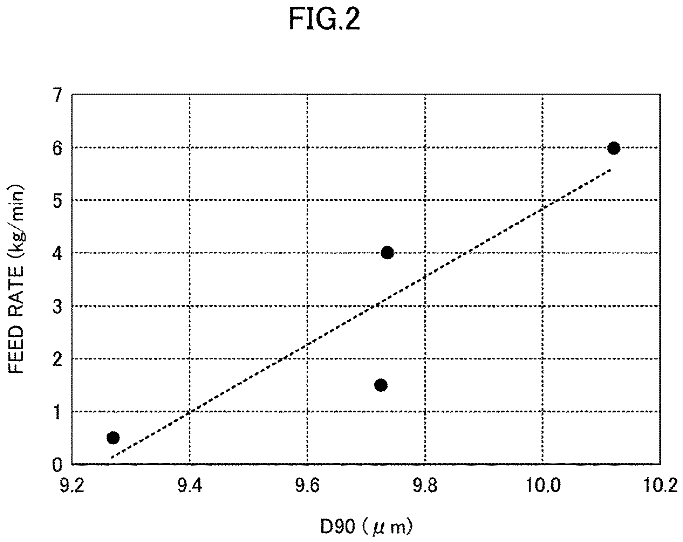

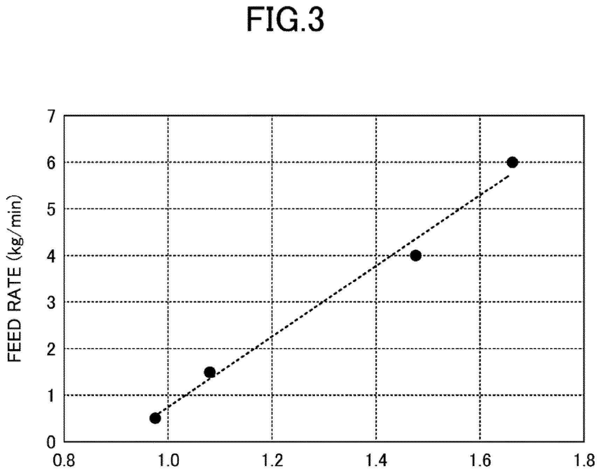

FIG. 2 illustrates a relationship between D90 and a feed rate, and FIG. 3 illustrates a relationship between a specific surface area and a feed rate. FIGS. 2 and 3 indicate that the feed rate increases as the D90 increases and as the specific surface area increases.

Therefore, the lithium carbonate according to the present disclosure, which has D90 and a specific surface area that are large, has high feed performance, and it is possible to prevent troubles, such as, for example, clogging during feeding and a decrease in feed rate. Thus, it is possible to increase productivity in the production of powder materials.

The present application claims priority to Japanese Patent Application No. 2022-124949, filed with the Japan Patent Office on August 4, 2022, and the entire contents of Japanese Patent Application No. 2022-124949 are incorporated in the present international application by reference.

### REFERENCE SIGNS LIST

- 10: Feed testing apparatus
- 11: Hopper
- 12: Vibrating feeder
- 13: Recovery container
- 14: Lithium carbonate powder

## Claims

1. Lithium carbonate powder, wherein
the lithium carbonate powder has
a specific surface area of more than 1.0 m²/g, and
D90 of 9 µm or more as measured through laser diffraction scattering particle size distribution analysis, where D90 is a 90% cumulative particle diameter on a volume basis.

2. The lithium carbonate powder according to claim 1, wherein
the lithium carbonate powder has
D50 of 3 µm or more and less than 9 µm as measured through laser diffraction scattering particle size distribution analysis, where D50 is a 50% cumulative particle diameter on a volume basis.

3. The lithium carbonate powder according to claim 1 or 2, wherein
the lithium carbonate powder has
D10 of 1 µm or more and less than 3 µm as measured through laser diffraction scattering particle size distribution analysis, where D10 is a 10% cumulative particle diameter on a volume basis.

4. The lithium carbonate powder according to claim 1 or 2, wherein
the lithium carbonate powder has a flow function of 2 or more.

5. The lithium carbonate powder according to claim 1 or 2, wherein
the lithium carbonate powder has a moisture percentage at 120°C according to a Karl Fischer method of 0.5% by mass or less.

6. The lithium carbonate powder according to claim 1 or 2, wherein
the lithium carbonate powder is raw material powder of a lithium metal complex oxide.
